# EUROPEAN PATENT APPLICATION

(11) **EP 2 911 438 A1**
(43) Date of publication of application: **26.08.2015**
(21) Application number: 13845137.2
(22) Date of filing: 12.08.2013
(51) Int. Cl.: H04W 24/00

(54) **METHOD AND DEVICE FOR MONITORING**

(30) Priority: 09.10.2012 CN 201210379843
(71) Applicant: ZTE Corporation, Shenzhen, Guangdong 518057 (CN)
(72) Inventor: WU, Hao, Shenzhen Guangdong 518057 (CN); XIE, Fang, Shenzhen Guangdong 518057 (CN)
(74) Representative: Modiano, Micaela Nadia
(86) International application number: PCT/CN2013/081329
(87) International publication number: WO 2014/056344

(57) **Abstract**

Disclosed are a method and device for monitoring. The method comprises: performing monitoring operation, by a gateway, on a monitored object in monitoring configuration information, and obtaining a monitored result (S102); reporting, by the gateway, the monitored result to a machine-to-machine (M2M) service platform or an M2M application server according to a report configuration in the monitoring configuration information (S104). With the embodiments of present invention, the effect is achieved that the M2M network is able to grasp various kinds of state parameters to execute statistics according to demands, and also, to obtain fault alarm information timely according to the configuration and execute corresponding operations timely.

## Description

### TECHNICAL FIELD

The disclosure relates to the field of communications, in particular to a monitoring method and apparatus.

### BACKGROUND

A machine-to-machine (M2M) communication network may extend the communication category and communication field of existing information communication networks; by embedding smart and communication capabilities in various possible objects, information from physical world is acquired, and based on analysis and processing on these information, the intelligence, interactivity and automation degree of existing information communication network service are strengthened and improved.

An M2M communication network has various network forms, which may be an independent physical network constructed alone, and also may be a logical network constructed on the existing public communication network and various government and enterprise private networks.

The M2M communication network may be divided into three layers in logical functions, i.e. a perception extension layer, a network/service layer and an application layer. The three layers are introduced as follows:
the perception extension layer: it mainly realizes the acquisition, automatic identification and smart control of physical world information. Various objects per se in the physical world do not have the communication capability. Smart nodes, such as a sensor, an actuator, a smart apparatus and a radio frequency identification (Radio Frequency Identification Devices, referred to as RFID) reader-writer, collect information about the physical world, and information interaction is performed through a communication module with a network layer. The main components contained therein have an M2M terminal device and an M2M gateway device.

The network/service layer: the network/service layer supports the transfer, routing and control of perception layer information, and provides support for the communication between human and thing as well as between thing and thing in the Internet of Things. Combined with the classification of the Internet of Things, network forms specifically contained in the network layer have: a communication network, the Internet, an industry network, etc. The main component contained therein has an M2M platform.

The application layer: the application layer contains various specific applications of the Internet of Things; there are public services as well as industry services, wherein the industry services may be industry public services facing the public, and also may be industry dedicated services satisfying internal specific application requirements of the industry. The public services are base services provided facing public common requirements, such as smart home and mobile payment. The industry dedicated services usually face specific requirements of the industry per se, and are services provided for the internal of the industry, such as a smart grid, smart traffic and smart environment, wherein some of industry services also may be provided facing the public, such as the smart traffic, which is called as an industry public service. The main component contained therein has an M2M application server.

A terminal peripheral: the terminal peripheral means a single device, like a sensor with an environment perception function, which can send perceived information to the M2M service platform or M2M application through the M2M gateway, and meanwhile also can receive downlink control on the terminal peripheral by the M2M application or M2M service platform.

An M2M gateway: due to the features that the processing capability, storage capability and power sources of the M2M terminal peripherals are limited, the M2M terminal peripherals cannot directly communicate with a communication network, and needs to access the communication network through the M2M gateway. The M2M gateway may perform protocol conversion between the M2M perception extension layer and an upper network. The M2M gateway can not only converge and forward data information collected by the M2M terminal peripheral, but also can receive control information of the M2M application or M2M service platform so as to manage the terminal peripherals.

The M2M platform provides some common capabilities and support to the M2M application, and provides an open interface so as to enable the application to access and use the network resources and capabilities. By providing standardized application program interfaces (API) for specific M2M applications, Internet of Things application development complexity may be simplified and Internet of Things application development deployment costs may be reduced.

In an M2M communication network architecture, a gateway, as a functional entity for connecting and managing a perception extension layer terminal device, needs to be able to provide information such as an M2M application execution state, gateway software and hardware operation state and the operation state of a terminal device to the M2M platform or M2M application server, so as to provide statistic data and fault alarm to the M2M platform or M2M application server. However, the existing prior art does not provide a monitoring manner which can satisfy above requirement in the M2M communication network architecture.

With regard to the problem that in the relevant technology, a gateway cannot provide information such as an M2M application execution state, gateway software and hardware operation state and the operation state of a terminal device to the M2M platform or M2M application server, and also cannot provide statistic data and fault alarm to the M2M platform or M2M application server, effective solutions have not been proposed at present.

### SUMMARY

The embodiments of the disclosure provide a monitoring method and apparatus so as to at least solve the above-mentioned problem.

According to an embodiment of the disclosure, a monitoring method is provided, comprising: performing a monitoring operation, by a gateway, on a monitored object in monitoring configuration information, and obtaining a monitored result; reporting, by the gateway, the monitored result to a machine-to-machine, M2M, service platform or an M2M application server according to a report configuration in the monitoring configuration information.

Alternatively, before the gateway performs the monitoring operation on the monitored object in the monitoring configuration information, the method further comprises: acquiring, by the gateway, the monitoring configuration information, wherein the monitoring configuration information is pre-configured on the gateway, or is received by the gateway from the M2M service platform or the M2M application server.

Alternatively, the monitoring configuration information comprises one monitoring task or multiple monitoring tasks, wherein the monitoring task comprises: a monitoring identifier, configured to uniquely identify one monitoring task, wherein the monitoring identifier is allocated by the M2M service platform or the M2M application server or the gateway; the monitored object, configured to indicate an object which needs to be monitored; and the report configuration, comprising a reporting manner and a reporting parameter.

Alternatively, the monitored object comprises: a wide area network, WAN, port of a gateway, a local area network, LAN, port of a gateway, a terminal peripheral, a gateway software module or a gateway hardware module.

Alternatively, the reporting manner comprises: periodic reporting and event trigger reporting, wherein the periodic reporting is configured to comprise a preset reporting period; and the event trigger reporting is provided with at least one event definition, wherein the event definition comprises: an event identifier and a trigger condition.

Alternatively, the same monitored object is able to be provided with multiple reporting manners.

Alternatively, performing the monitoring operation, by the gateway, on the monitored object in the monitoring configuration information, and obtaining the monitored result comprise the gateway storing the monitoring task in a local monitoring task list; and the gateway monitoring the monitored object according to the monitoring task list to acquire the monitored result of the monitored object.

Alternatively, if the terminal peripheral is not registered in the gateway, the gateway reports to the M2M service platform or M2M application server the monitored result that the monitored object does not exist.

Alternatively, when the reporting manner is the periodic reporting, and when the monitoring period ends, the gateway reports the monitored result to the M2M service platform or M2M application server; and when the reporting manner is the event trigger reporting, and when the monitoring condition is satisfied, the gateway reports the monitored result to the M2M service platform or M2M application server.

According to another embodiment of the disclosure, a monitoring apparatus is provided, comprising: a monitoring module, configured to perform a monitoring operation on a monitored object in monitoring configuration information, and obtain a monitored result; and a reporting module, configured to report the monitored result to a machine-to-machine, M2M, service platform or an M2M application server according to a report configuration in the monitoring configuration information.

Alternatively, the apparatus further comprises: an acquisition module, configured to acquire the monitoring configuration information, wherein the monitoring configuration information is pre-configured on the gateway, or is received by the gateway from the M2M service platform or the M2M application server.

Alternatively, the monitoring configuration information comprises one monitoring task or multiple monitoring tasks, wherein the monitoring task comprises a monitoring identifier, configured to uniquely identify one monitoring task, wherein the monitoring identifier is allocated by the M2M service platform or the M2M application server or the gateway; the monitored object, configured to indicate an object which needs to be monitored; and the report configuration, comprising a reporting manner and a reporting parameter.

Alternatively, the monitored object comprises: a wide area network, WAN, port of a gateway, a local area network, LAN, port of a gateway, a terminal peripheral, a gateway software module or a gateway hardware module.

Alternatively, the reporting manner comprises: periodic reporting and event trigger reporting, wherein the periodic reporting configured to comprise a preset reporting period; and the event trigger reporting is provided with at least one event definition, wherein the event definition comprises: an event identifier and a trigger condition.

Alternatively, the same monitored object is able to be provided with multiple reporting manners.

Alternatively, the monitoring module comprises: a storing unit, configured to store the monitoring task in a local monitoring task list; and a monitoring unit, configured to monitor the monitored object according to the monitoring task list to acquire the monitored result of the monitored object.

Alternatively, the reporting module is configured to, if the terminal peripheral is not registered in the gateway, report to the M2M service platform or M2M application server the monitored result that the monitored object does not exist.

Alternatively, the reporting module is configured to, when the reporting manner is the periodic reporting and when the monitoring period ends, report the monitored result to the M2M service platform or M2M application server; and the reporting module is configured to, when the reporting manner is the event trigger reporting and when the trigger condition is satisfied, report the monitored result to the M2M service platform or M2M application server.

Through the disclosure, the manner of a gateway performing a monitoring operation on an M2M device according to monitoring configuration information and obtaining a monitoring report and reporting the monitoring report is used, which solves the problem that in the relevant technology, the gateway cannot provide information, such as an M2M application execution state, gateway software and hardware operation state and the operation state of the terminal peripheral to the M2M platform or M2M application server, and also cannot provide statistic data and fault alarm to the M2M platform or M2M application server; further, the effect is achieved that the M2M network is able to grasp various kinds of state parameters to execute statistics according to demands, and also, to obtain fault alarm information timely according to the configuration and execute corresponding operations timely.

### BRIEF DESCRIPTION OF THE DRAWINGS

Drawings, provided for further understanding of the present invention and forming a part of the specification, are used to explain the present invention together with embodiments of the present invention rather than to limit the present invention. In the accompanying drawings:
Fig. 1 is a flowchart of a monitoring method according to an embodiment of the disclosure;
Fig. 2 is a monitoring flowchart according to the alternative embodiment 1 of the disclosure;
Fig. 3 is a monitoring flowchart according to the alternative embodiment 2 of the disclosure;
Fig. 4 is a structural block diagram of a monitoring apparatus according to an embodiment of the disclosure; and
Fig. 5 is a structural block diagram of a monitoring apparatus according to an alternative embodiment of the disclosure.

### DESCRIPTION OF EMBODIMENTS

The alternative embodiments are described in conjunction with the drawings as follows. It should be noted that the embodiments and the characteristics of the embodiments can be combined with each other if no conflict is caused.

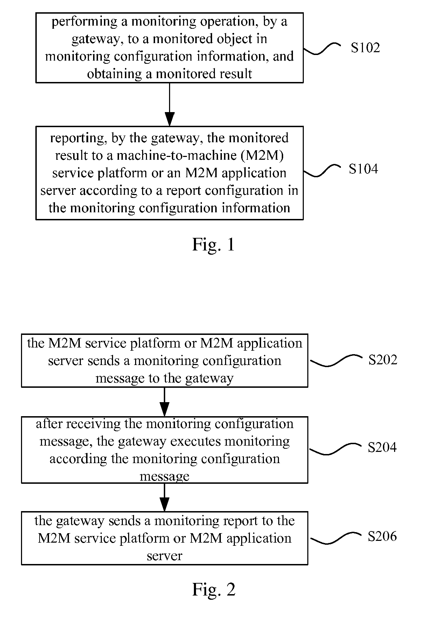

Fig. 1 is a flowchart of a monitoring method according to an embodiment of the disclosure; as shown in Fig. 1, the method mainly comprises the following steps (step S102-step S104):
step S102, a gateway performs a monitoring operation on a monitored object in monitoring configuration information, and obtains a monitored result;
step S104, the gateway reports the monitored result to a machine-to-machine (M2M) service platform or an M2M application server according to a report configuration in the monitoring configuration information.

In the present embodiment, before step S102, the method further comprises: acquiring, by the gateway, the monitoring configuration information, wherein the monitoring configuration information is pre-configured on the gateway, or is received by the gateway from the M2M service platform or the M2M application server.

In the present embodiment, the monitoring configuration information comprises one monitoring task or multiple monitoring tasks, wherein the monitoring task comprises: a monitoring identifier, configured to uniquely identify a monitoring task and allocated by the M2M service platform or M2M application server or gateway; a monitored object, configured to indicate an object which needs to be monitored; and a report configuration, comprising: a reporting manner and a reporting parameter.

Alternatively, the monitored object comprises: a wide area network (WAN) port of a gateway, a local area network (LAN) port of a gateway, a terminal peripheral, a gateway software module or a gateway hardware module.

Alternatively, the reporting manner comprises: periodic reporting and event trigger reporting, wherein the periodic reporting is provided with a preset reporting period; and the event trigger reporting is provided with at least one event definition, wherein the event definition comprises: an event identifier and a trigger condition.

In the present embodiment, the same monitored object can be configured with multiple reporting manners.

In the present embodiment, step S102 may be implemented by the following manner: the gateway stores a monitoring task into a local monitoring task list; and the gateway monitors a monitored object according to the monitoring task list to acquire a monitored result of the monitored object.

In the present embodiment, if the terminal peripheral is not registered in the gateway, the gateway reports to the M2M service platform or M2M application server a monitored result that the monitored object does not exist.

In the present embodiment, when the reporting manner is the periodic reporting, and when the monitoring period ends, the gateway reports the monitored result to the M2M service platform or M2M application server; and when the reporting manner is the event trigger reporting, and when the trigger condition is satisfied, the gateway reports the monitored result to the M2M service platform or M2M application server.

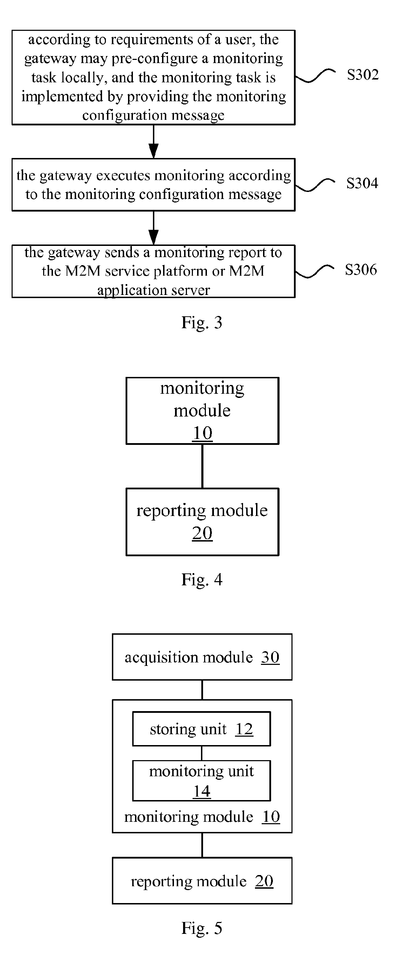

The above-mentioned monitoring method is described in details in combination with Fig. 2, Fig. 3, alternative embodiment 1 and alternative embodiment 2.

### Alternative embodiment 1

Fig. 2 is a monitoring flowchart according to the alternative embodiment 1 of the disclosure. As shown in Fig. 2, the flow comprises the following steps (step S202-step S206):
step S202, an M2M service platform or M2M application server sends a monitoring configuration message to a gateway.

The information contained in the monitoring configuration message is as shown in table 1:

**Table 1**

| Parameter | Note |
|---|---|
| monitoring identifier | identifying a current monitoring task |
| monitored object | indicating a current monitored object |
| report configuration | configuring a form and content of reporting |

Three monitoring parameters are briefly described as follows:
the monitoring identifier: is configured to uniquely identify one monitoring task, and is allocated by an M2M service platform or an M2M application server;
the monitored object: is configured to indicate an object which needs to be monitored, for example, a WAN (wide area network) port of a gateway, a LAN (local area network) of a gateway, a terminal peripheral, a gateway software module or a gateway hardware module;

The report configuration: comprises a reporting manner and a reporting parameter(s), wherein the reporting manner is periodic reporting or event trigger reporting, and the periodic reporting is provided with a periodic time, and the event trigger reporting is provided with an event definition which comprises an event identifier and a trigger condition; and the reporting parameters is a monitored result which needs to be reported to an M2M service platform or M2M application server.

It needs to be noted here that multiple reporting manners may be configured for the same monitored object, and multiple reporting events also may be configured for the manner of the event trigger reporting.

For example, the reporting manner is "event trigger reporting", and the event identifier is "event A", and the trigger condition is "IP address changes", and the reporting parameters are "gateway identifier, time and event", then the gateway sends a monitoring report containing a gateway identifier, a current time and an event identifier to an M2M service platform or M2M application server when an IP address changes.

An example 1 of the monitoring configuration (a monitoring task with the type of the event trigger) is shown in table 2:

**Table 2**

| Parameter | Value |
|---|---|
| monitoring identifier | 00001 |
| monitored object | WAN |
| report configuration | reporting manner = "event trigger" |
| | event definition: |
| | {event identifier = "event A"; trigger condition = "IP address changes"} |
| | reporting parameter: |
| | {"event", "time", "IP address"} |

An example 2 of the monitoring configuration (a monitoring task with the type of the periodic trigger) is shown in table 3:

**Table 3**

| Parameter | Value |
|---|---|
| monitoring identifier | 00002 |
| monitored object | terminal device A |
| report configuration | reporting manner = "periodic" |
| | periodic length = 24 hours |
| | reporting parameter: |
| | {"terminal identifier", "connection state" |

Step S204, after receiving the monitoring configuration message, the gateway executes monitoring according the monitoring configuration message.

The gateway stores a monitoring task in the monitoring configuration into a local monitoring task list, and monitors a monitored object provided in the monitoring configuration to acquire a monitored result of the monitored object, wherein the monitored result is acquired according to a reporting parameter provided in the report configuration of the monitoring configuration.

Step S206, the gateway sends a monitoring report to the M2M service platform or M2M application server.
(1) if the terminal peripheral provided by the monitored object is not registered in the gateway, the gateway should report to the M2M service platform or M2M application that the monitored object does not exist;
(2) if the report configuration indicates the periodic reporting, then the gateway sends the monitored result to the M2M service platform or M2M application server when a monitoring period timer reaches the time, wherein the monitored result is data acquired according to the reporting parameter.
(3) if the monitoring configuration indicates the event trigger reporting, then after an event occurs, a monitored result is sent to the M2M service platform or M2M application server.

Information contained in a monitoring report sent by the gateway is shown in table 4:

**Table 4**

| Parameter |
|---|
| monitoring identifier |
| monitored result |
| ...... |

The monitored result is shown in table 5:

**Table 5**

| Parameter | Value |
|---|---|
| monitoring identifier | 00001 |
| monitored result | {"event A", "2012-9-11", "10.75.75.101"} |

### Alternative embodiment 2

Fig. 3 is a monitoring flowchart according to the alternative embodiment 2 of the disclosure. As shown in Fig. 3, the flow comprises the following steps (step S302-step S306):
step S302, according to the requirements of a user, a gateway may pre-configure a monitoring task locally, and the monitoring task is implemented by providing a monitoring configuration message.

The information contained in the monitoring configuration message is shown in table 6:

**Table 6**

| Parameter | Note |
|---|---|
| monitoring identifier | identifying a current monitoring task |
| monitored object | indicating a current monitored object |
| report configuration | configuring a form and content of reporting |

Three monitoring parameters are briefly described as follows:
the monitoring identifier: is configured to uniquely identify one monitoring task, and is allocated by a gateway;
the monitored object: is configured to indicate an object which needs to be monitored, for example, a WAN (wide area network) port of a gateway, or a LAN (local area network) of a gateway, or a terminal peripheral, or a gateway, or a gateway software module or a gateway hardware module;
the report configuration: comprises a reporting manner and a reporting parameter(s), wherein the reporting manner is periodic reporting or event trigger reporting, wherein the periodic reporting is provided with a periodic time, and the event trigger reporting is provided with an event definition which comprises an event identifier and a trigger condition; and the reporting parameters is a monitored result which needs to be reported to an M2M service platform or M2M application server.

It needs to be noted here that multiple reporting manners may be configured for the same monitored object, and multiple reporting events also may be configured for the manner of the event trigger reporting.

For example, the reporting manner is "event trigger reporting", and the event identifier is "event A", and the trigger condition is "IP address changes", and the reporting parameter is "gateway identifier, time and event", then the gateway sends a monitoring report containing a gateway identifier, a current time and an event identifier to an M2M service platform or M2M application server when an IP address changes.

Step S304, the gateway executes monitoring according to the monitoring configuration message.

The gateway stores a monitoring task in the monitoring configuration into a local monitoring task list, and monitors a monitored object provided in the monitoring configuration to acquire a monitored result of the monitored object, wherein the monitored result is acquired according to a reporting parameter provided in the report configuration of the monitoring configuration.

Step S306, the gateway sends a monitoring report to the M2M service platform or M2M application server.
(1) if the monitoring configuration indicates the periodic reporting, then the monitored result is sent to the M2M service platform or M2M application server according to a designated report parameter in the report configuration when a monitoring period timer reaches the time, wherein the monitored result is data acquired according to the reporting parameter.
(2) if the monitoring configuration indicates the event trigger reporting, then the monitored result is sent to the M2M service platform or M2M application server according to a designated report parameter in report configuration after an event occurs, wherein the information contained in the monitoring report sent by the gateway is shown in table 7:

**Table 7**

| Parameter |
|---|
| monitoring identifier |
| monitored result |
| ...... |

By using a monitoring method provided in the above-mentioned embodiment, it solves the problem that in the relevant technology, a gateway cannot provide information, such as an M2M application execution state, a gateway software and hardware operation state and an operation state of a terminal peripheral, to the M2M platform or M2M application server, and also cannot provide statistic data and a fault alarm to the M2M platform or M2M application server; further, the effect is achieved that the M2M network is able to grasp various kinds of state parameters to execute statistics according to demands, and also, to obtain fault alarm information timely according to the configuration and execute corresponding operations timely.

Fig. 4 is a structural block diagram of a monitoring apparatus according to an embodiment of the disclosure. The apparatus is located in a gateway for implementing a monitoring method provided in the above-mentioned embodiment. As shown in Fig. 4, the apparatus mainly comprises: a monitoring module **10** and a reporting module **20.** The monitoring module **10** is configured to perform a monitoring operation on a monitored object in monitoring configuration information, and obtain a monitored result; a reporting module **20** is connected to the monitoring module **10** and configured to report the monitored result to a machine-to-machine (M2M) service platform or an M2M application server according to a report configuration in the monitoring configuration information.

Fig. 5 is a structural block diagram of a monitoring apparatus according to a alternative embodiment of the disclosure. As shown in Fig. 5, the apparatus further comprises: an acquisition module **30,** connected to the monitoring module **10** and configured to acquire the monitoring configuration information, wherein the monitoring configuration information is pre-configured on the gateway, or is received by the gateway from the M2M service platform or M2M application server.

In the alternative embodiment, the monitoring configuration information comprises one monitoring task or multiple monitoring tasks, wherein the monitoring task comprises: a monitoring identifier, configured to uniquely identify one monitoring task, and is allocated by the M2M service platform or M2M application server or gateway; a monitored object, configured to indicate an object which needs to be monitored; and a report configuration, comprising: a reporting manner and a reporting parameter.

The monitored object comprises: a wide area network (WAN) port of a gateway, a local area network (LAN) port of a gateway, a terminal peripheral, a gateway software module or a gateway hardware module.

The reporting manner comprises: periodic reporting and event trigger reporting, wherein the periodic reporting is configured to comprise a preset reporting period; and the event trigger reporting is provided with at least one event definition, wherein the event definition comprises: an event identifier and a trigger condition.

Alternatively, the same monitored object can be provided with multiple reporting manners.

In the alternative embodiment, the monitoring module **10** comprises: a storing unit **12,** configured to store a monitoring task in a local monitoring task list; and a monitoring unit **14,** connected to the storing unit **12** and configured to monitor a monitored object according to the monitoring task list to acquire a monitored result of the monitored object.

In the alternative embodiment, the reporting module is configured to, if the terminal peripheral is not registered in the gateway, report to the M2M service platform or M2M application server a monitored result that the monitored object does not exist.

In the alternative embodiment, the reporting module is configured to, when the reporting manner is the periodic reporting and when the monitoring period ends, report the monitored result to the M2M service platform or M2M application server; and the reporting module is configured to, when the reporting manner is the event trigger reporting and when the trigger condition is satisfied, report the monitored result to the M2M service platform or M2M application server.

By using the monitoring apparatus provided in the above-mentioned embodiment, it solves the problem that in the relevant technology, a gateway cannot provide information, such as an M2M application execution state, a gateway software and hardware operation state and an operation state of a terminal peripheral, to the M2M platform or M2M application server, and also cannot provide statistic data and a fault alarm to the M2M platform or M2M application server; further, the effect is achieved that the M2M network is able to grasp various kinds of state parameters to execute statistics according to demands, and also, to obtain fault alarm information timely according to the configuration and execute corresponding operations timely.

It can be seen from the above-mentioned description that the disclosure realizes the following technical effects: the manner of a gateway performing a monitoring operation on an M2M device according to monitoring configuration information and obtaining a monitoring report and reporting a monitoring report is used, which may solve the problem that in the relevant technology, a gateway cannot provide information, such as an M2M application execution state, a gateway software and hardware operation state and an operation state of a terminal peripheral to the M2M platform or M2M application server, and also cannot provide statistic data and a fault alarm to the M2M platform or M2M application server; further, the effect is achieved that the M2M network is able to grasp various kinds of state parameters to execute statistics according to demands, and also, to obtain fault alarm information timely according to the configuration and execute corresponding operations timely.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The above description is only alternative embodiments of the present invention and is not intended to limit the present invention, and the present invention can have a variety of changes and modifications for ordinary person skilled in the field. Any modification, equivalent replacement, or improvement made within the spirit and principle of the present invention shall all fall within the protection scope of the present invention.

## Claims

1. A monitoring method, **characterized by** comprising:
performing a monitoring operation, by a gateway, on a monitored object in monitoring configuration information, and obtaining a monitored result;
reporting, by the gateway, the monitored result to a machine-to-machine, M2M, service platform or an M2M application server according to a report configuration in the monitoring configuration information.

2. The method according to claim 1, **characterized in that** before the gateway performs the monitoring operation on the monitored object in the monitoring configuration information, the method further comprises:
acquiring, by the gateway, the monitoring configuration information, wherein the monitoring configuration information is pre-configured on the gateway, or is received by the gateway from the M2M service platform or the M2M application server.

3. The method according to claim 2, **characterized in that** the monitoring configuration information comprises one monitoring task or multiple monitoring tasks, wherein the monitoring task comprises:
a monitoring identifier, configured to uniquely identify one monitoring task, wherein the monitoring identifier is allocated by the M2M service platform or the M2M application server or the gateway;
the monitored object, configured to indicate an object which needs to be monitored; and
the report configuration, comprising a reporting manner and a reporting parameter.

4. The method according to claim 3, **characterized in that** the monitored object comprises: a wide area network, WAN, port of a gateway, a local area network, LAN, port of a gateway, a terminal peripheral, a gateway software module or a gateway hardware module.

5. The method according to claim 3, **characterized in that** the reporting manner comprises: periodic reporting and event trigger reporting, wherein
the periodic reporting is configured to comprise a preset reporting period; and
the event trigger reporting is provided with at least one event definition, wherein the event definition comprises: an event identifier and a trigger condition.

6. The method according to claim 5, **characterized in that** the same monitored object is able to be provided with multiple reporting manners.

7. The method according to claim 3, **characterized in that** performing the monitoring operation, by the gateway, on the monitored object in the monitoring configuration information, and obtaining the monitored result comprise:
the gateway storing the monitoring task in a local monitoring task list; and
the gateway monitoring the monitored object according to the monitoring task list to acquire the monitored result of the monitored object.

8. The method according to claim 4, **characterized in that**
if the terminal peripheral is not registered in the gateway, the gateway reports to the M2M service platform or M2M application server the monitored result that the monitored object does not exist.

9. The method according to claim 5, **characterized in that**
when the reporting manner is the periodic reporting, and when the monitoring period ends, the gateway reports the monitored result to the M2M service platform or M2M application server; and
when the reporting manner is the event trigger reporting, and when the monitoring condition is satisfied, the gateway reports the monitored result to the M2M service platform or M2M application server.

10. A monitoring apparatus, located at a gateway, **characterized by** comprising:
a monitoring module, configured to perform a monitoring operation on a monitored object in monitoring configuration information, and obtain a monitored result; and
a reporting module, configured to report the monitored result to a machine-to-machine, M2M, service platform or an M2M application server according to a report configuration in the monitoring configuration information.

11. The apparatus according to claim 10, **characterized in that** the apparatus further comprises:
an acquisition module, configured to acquire the monitoring configuration information, wherein the monitoring configuration information is pre-configured on the gateway, or is received by the gateway from the M2M service platform or the M2M application server.

12. The apparatus according to claim 11, **characterized in that** the monitoring configuration information comprises one monitoring task or multiple monitoring tasks, wherein the monitoring task comprises:
a monitoring identifier, configured to uniquely identify one monitoring task, wherein the monitoring identifier is allocated by the M2M service platform or the M2M application server or the gateway;
the monitored object, configured to indicate an object which needs to be monitored; and
the report configuration, comprising a reporting manner and a reporting parameter.

13. The apparatus according to claim 12, **characterized in that** the monitored object comprises: a wide area network, WAN, port of a gateway, a local area network, LAN, port of a gateway, a terminal peripheral, a gateway software module or a gateway hardware module.

14. The apparatus according to claim 12, **characterized in that** the reporting manner comprises: periodic reporting and event trigger reporting, wherein
the periodic reporting is configured to comprise a preset reporting period; and
the event trigger reporting is provided with at least one event definition, wherein the event definition comprises: an event identifier and a trigger condition.

15. The apparatus according to claim 14, **characterized in that** the same monitored object is able to be provided with multiple reporting manners.

16. The apparatus according to claim 12, **characterized in that** the monitoring module comprises:
a storing unit, configured to store the monitoring task in a local monitoring task list; and
a monitoring unit, configured to monitor the monitored object according to the monitoring task list to acquire the monitored result of the monitored object.

17. The apparatus according to claim 13, **characterized in that**
the reporting module is configured to, if the terminal peripheral is not registered in the gateway, report to the M2M service platform or M2M application server the monitored result that the monitored object does not exist.

18. The apparatus according to claim 14, **characterized in that**
the reporting module is configured to, when the reporting manner is the periodic reporting and when the monitoring period ends, report the monitored result to the M2M service platform or M2M application server; and
the reporting module is configured to, when the reporting manner is the event trigger reporting and when the trigger condition is satisfied, report the monitored result to the M2M service platform or M2M application server.
